# EUROPÄISCHE PATENTSCHRIFT

(11) **EP 0 984 416 B1**
(45) Veröffentlichungstag und Bekanntmachung des Hinweises auf die Patenterteilung: **27.04.2005**
(21) Anmeldenummer: 99111202.0
(22) Anmeldetag: 09.06.1999
(51) Int. Cl.: G08G 1/09

(54) **Verfahren zur Verknüpfung von digitalen Verkehrswegenetzbeschreibungen und Ortsdatenbank**
Process to link digital road traffic network descriptions and a location database
Procédé de rattachement de descriptions numériques de réseaux de circulation routière et une base de données de lieux

(30) Priorität: 29.08.1998 DE 19839413
(43) Veröffentlichungstag der Anmeldung: 08.03.2000
(73) Patentinhaber: ROBERT BOSCH GMBH, 70442 Stuttgart (DE)
(72) Erfinder: Kynast, Andreas, 31139 Hildesheim (DE); Kersken, Ulrich, 31199 Diekholzen (DE)

(56) Entgegenhaltungen:
- EP-A- 0 263 253
- EP-A- 0 756 260

## Beschreibung

Die Erfindung betrifft ein Verfahren zur Verknüpfung einer digitalen Verkehrswegenetzbeschreibung mit mindestens einer weiteren digitalen Verkehrswegenetzbeschreibung und eine Ortsdatenbank mit einer Verknüpfung zu mindestens einer weiteren Ortsdatenbank, insbesondere für die Ermittlung von Routen zwischen in der Ortsdatenbank und in der mindestens einen weiteren Ortsdatenbank enthaltenen Orten eines Verkehrswegenetzes, wobei eine zur Decodierung von digital codierten Verkehrsmeldungen vorgesehene Ortsdatenbank (L2, D3) zur Decodierung der digital codierten Verkehrsmeldungen erforderliche Orte als Ortscodes enthält, wobei jeweils einem Ortscode ein Verkehrsweg und Verweise auf benachbarte auf dem gleichen Verkehrsweg liegende Orte in einem Datensatz zugeordnet sind.

Mit dem Radio-Daten-System (RDS) wird eine zusätzliche und unhörbare Übermittlung von digitalen Daten parallel zu Rundfunkprogrammen in einem Datenkanal ermöglicht. Spezifikationen des Radio-Daten-Systems für UKW-Hörfunk sind unter anderem in der Druckschrift Tech. 3244 - E, März 1984 der europäischen Runfunk-Union (EBU) festgelegt. Rundfunkempfänger mit geeigneten RDS-Decodern können übermittelte Daten zusätzlich zum Rundfunkempfang mit dem selben Empfangsteil aufnehmen und decodieren. Für die Datenübertragung sind 32 Gruppen zu jeweils 104 Bit vorgesehen, wobei jeder der übertragenen Gruppen jeweils ein bestimmter Dienst zugewiesen wird. Die Gruppe 8a ist zur Zeit für die Übertragung von digital codierten Verkehrsmeldungen vorgesehen. Solche Verkehrsmeldungen können grundsätzlich auch über andere Übertragungssysteme, beispielsweise DAB (Digital Audio Radio, Mobilfunksysteme) übertragen werden.

Der Aufbau und die Codierung dieser Verkehrsmeldungen sind in CEN Draft pr. ENV/278/4/1/0011 festgelegt, der auf dem Normvorschlag ALERT C, November 1990, herausgegeben vom RDS ATT ALERT Consortium, basiert. Die wesentlichen Elemente einer Verkehrsmeldung sind dabei der Ort des Geschehens (Location) und das Ereignis (Event). Diese Angaben sind katalogisiert, das heißt, daß jedem verkehrsrelevanten Ort und jedem verkehrsrelevanten Ereignis ein eindeutiger Code zugewiesen ist. Die Verkettung der Orte in der Ortstabelle entlang existierender Straßen gibt den Verlauf wieder. Außer den üblichen Einrichtungen eines Empfangsgerätes mit einem RDS-Decoder sind zur Nutzung des Verkehrsmeldungskanals TMC (Traffic Message Channel) Einrichtungen zur Decodierung, zur Speicherung, zur Weiterverarbeitung und zur Ausgabe der Verkehrsmeldungen erforderlich.

Die für die Decodierung der digital codierten Verkehrsmeldungen erforderlichen Ortsdatenbanken bestehen aus Listen von Anschlußstellen, Autobahnkreuzen, Autobahndreiecken, Abfahrten zu Parkplätzen und ähnlichen Orten, wobei die auf jeweils einem Verkehrsweg (Autobahn, Bundesstraße) liegenden Orte durch Verweise miteinander verkettet sind. Da nicht alle Orte aus beiden Fahrtrichtungen zu erreichen sind, werden die Verkettungen für beide Richtungen getrennt angegeben, indem zu jedem Ort ein Vorgänger bzw. Nachfolger in der Ortsdatenbank eingetragen ist. Besitzt ein Ort keinen Nachfolger, beispielsweise am Ende einer Straße, so wird dies durch einen besonderen Eintrag gekennzeichnet. Orte, wie beispielsweise Kreuzungen, die an mehreren Verkehrswegen liegen, sind bei sämtlichen dieser Verkehrswege mit jeweils anderen Ortscodes eingetragen.

Diese Ortsdatenbankstruktur, bei der also keine Beziehungen zwischen gleichen Orten auf verschiedenen Verkehrswegen erkennbar sind, genügt für die Decodierung der Verkehrsmeldungen. Für die Ausgabe der decodierten Verkehrsmeldungen ist zwar dann für einen jeweils gleichen Ort auch ein gleicher Name vorgesehen, der in codierter Form bei jedem Auftreten des gleichen Ortes in der Ortsdatenbank angegeben ist. Diese Angabe dient jedoch nur zur Ausgabe des eigentlichen Namens als alphanumerische Anzeige oder Sprachausgabe.

Ein Vorteil der digital codierten Verkehrsmeldungen besteht darin, daß diese nicht als Sprachmuster, sondern als Daten vorliegen, die in vielfältiger Weise verarbeitet werden können. Dadurch ist beispielsweise eine Selektion der Verkehrsmeldungen möglich, so daß der Autofahrer nur diejenigen Verkehrsmeldungen erhält, die sich auf seine voraussichtliche Route und möglicherweise dafür in Frage kommende Umleitungen beziehen.

Voraussetzung für eine derartige Selektion ist es allerdings, daß dem diese Selektion durchführenden Rechner die voraussichtliche Route bekannt ist. Dieses kann durch eine manuelle Eingabe der voraussichtlichen Route erfolgen. Eine andere Möglichkeit besteht darin, das Fahrziel einzugeben und die Route vom Rechner ermitteln zu lassen.

Geeignete Rechenverfahren sind bekannt und beispielsweise innerhalb von PC-Programmen erhältlich. Es wird dazu allerdings eine Straßenkarte benötigt, welche die in Frage kommenden Straßen und Kreuzungen sowie die Entfernungen zwischen den Kreuzungen und anderen Orten enthält.

Die Verwendung einer derartigen Ortsdatenbank der Routensuche ist gemäß DE 196 06 010 A1 dadurch möglich, daß Querverweise zu denjenigen Orten vorliegen, die an zwei Wegen liegen, also Kreuzungen darstellen. Damit ist jedoch noch keine Routensuche zwischen Orten möglich, die in verschiedenen Ortsdatenbanken aufgeführt sind. Dies kann beispielsweise bei länderübergreifenden Routensuchen vorkommen, da die Erstellung von Ortsdatenbanken im allgemeinen länderweise erfolgt. Dieses Problem kann jedoch auch innerhalb eines Landes auftreten, wenn beispielsweise regionale Ortsdatenbanken eine landesweite Ortsdatenbank ergänzen, da letztere das Wegenetz in den Ballungsräumen nur unzureichend erfaßt oder verschiedene Verkehrsnetze (PKW, Bahn, usw.) durch die Datenbanken beschrieben werden.

Aufgabe der vorliegenden Erfindung ist es daher, ein Verfahren zur Verknüpfung digitaler Verkehrswegenetzbeschreibungen und eine zur Verknüpfung mit mindestens einer weiteren Ortsdatenbank, insbesondere für die Ermittlung von Routen zwischen in der Ortsdatenbank und mindestens einer weiteren Ortsdatenbank enthaltenen Orten, geeignete Ortsdatenbank vorzuschlagen.

Diese Aufgabe wird bei dem erfindungsgemäßen Verfahren dadurch gelöst, daß Datensätze derjenigen Orte, die mindestens einen benachbarten Ort in mindestens einer der weiteren Verkehrswegenetzbeschreibungen aufweisen, mindestens einen Verweis auf mindestens einen solchen benachbarten Ort aufweisen.

Die erfindungsgemäße Ortsdatenbank ist dadurch gekennzeichnet, daß die Datensätze derjenigen Orte, die mindestens einen benachbarten Ort in mindestens einer der weiteren Ortsdatenbanken aufweisen, mindestens einen Verweis auf mindestens einen solchen benachbarten Ort einschließlich einer Ortsdatenbankreferenz enthalten. Dabei ist vorzugsweise vorgesehen, daß die Ortsdatenbankreferenz aus einer Ländernummer und einer Ortsdatenbanknummer besteht.

Die Erfindung ermöglicht eine ortsdatenbank-übergreifende Suche von Routen, beispielsweise innerhalb des europäischen Verkehrswegenetzes, ohne die Struktur der Ortsdatenbank, wie sie zur Decodierung von Verkehrsmeldungen erforderlich ist, grundsätzlich zu verändern. Die Routensuche als solche ist nicht Gegenstand der Erfindung. Dazu sind verschiedene Verfahren bekannt. Es ist lediglich erforderlich, daß in der Ortsdatenbank Informationen über die geographische Lage der Orte vorhanden sind, beispielsweise deren geographische Koordinaten. Die Anwendung der Erfindung ist nicht auf eine Routensuche beschränkt. So kann beispielsweise auch eine Codierung und Decodierung von ortsdatenbank-übergreifenden Meldungen mit der Erfindung vorgenommen werden.

Um einen in der Ortsdatenbank als Verweis enthaltenen Ort einer anderen Ortsdatenbank von anderen Informationen unterscheiden zu können, ist bei einer vorteilhaften Ausgestaltung der erfindungsgemäßen Ortsdatenbank vorgesehen, daß die Ortsdatenbankreferenz durch ein reserviertes Codewort als solches gekennzeichnet ist. Dieses kann beispielsweise aus sechs voranstehenden Einsen bestehen.

Eine erste Ausführungsform der erfindungsgemäßen Ortsdatenbank, bei der jeweils ein Datensatz außer einem Datenfeld für den jeweiligen Ort und anderen Datenfeldern je ein Datenfeld für die Kennzeichnung benachbarter Orte enthält, besteht darin, daß die Datenfelder für die Kennzeichnung benachbarter Orte jeweils zur Aufnahme des reservierten Codeworts, der Ortsdatenbankreferenz und des Ortscodes eines benachbarten in einer der weiteren Ortsdatenbanken befindlichen Ortes ausgelegt sind.

Bei dieser Ausführungsform können in dem Datensatz eines Ortes zwei Orte aus einer fremden Ortsdatenbank referenziert werden, wobei die Richtung berücksichtigt wird. Die Erweiterung erfolgt nur an diesen Übergangspunkten, alle anderen Datensätze ohne Referenzen auf andere Ortsdatenbanken bleiben unverändert.

Eine zweite Ausführungsform der erfindungsgemäßen Ortsdatenbank, bei der jeweils ein Datensatz außer einem Datenfeld für den jeweiligen Ort und anderen Datenfeldern je ein Datenfeld für die Kennzeichnung benachbarter Orte enthält, besteht darin, daß die Datenfelder für die Kennzeichnung benachbarter Orte jeweils zur Aufnahme des reservierten Codeworts und der Ortsdatenbankreferenz ausgelegt sind und daß ein weiteres Datenfeld bei Vorliegen eines benachbarten in einer der weiteren Ortsdatenbanken befindlichen Ortes dessen Ortscode enthält.

Bei dieser Ausführungsform wird anstelle der Endekennung (der jeweils betrachtete Ort liegt am Ende einer von der eigenen Ortsdatenbank erfaßten Straße) die Ortsdatenbankreferenz eingefügt. Da hier nur die Enden von Streckenverläufen berücksichtigt werden, reicht die Anfügung des Ortscodes am Ende eines Datensatzes. Diese Ausführungsform hat den Vorteil, daß sie mit den in DE 196 06 010 A1 vorgeschlagenen Strukturen übereinstimmt. Dabei können komplexe Kreuzungssituationen unter der Ausnutzung bereits bekannter Ortsdatenbankelemente beschrieben werden.

Bei einer dritten Ausführungsform der erfindungsgemäßen Ortsdatenbank, bei der jeweils ein Datensatz außer einem Datenfeld für den jeweiligen Ort und anderen Datenfeldern je ein Datenfeld für die Kennzeichnung benachbarter Orte enthält, ist vorgesehen, daß die Datenfelder für die Kennzeichnung benachbarter Orte entsprechend dem durch die Ortsdatenbank wiedergegebenen Teil des Wegenetzes belegt sind und daß in einem Datenfeld für Querverweise die Ortsdatenbankreferenz und der Ortscode eines benachbarten in einer der weiteren Ortsdatenbanken befindlichen Ortes abgelegt sind.

Bei dieser Ausführungsform bleiben die für die Decodierung der Verkehrsmeldungen vorgesehenen Einträge unverändert, insbesondere auch die Endekennung. Durch Anhängen von Datenfelder an die betroffenen Datensätze wird der Querverweis jeweils realisiert. Die Ausführungsform hat den Vorteil, daß sie die ursprüngliche Ortsdatenbank nicht verändert. Bei dieser Ausführungsform können auch komplexe Kreuzungssituationen beschrieben werden. Bei der ersten bis dritten Ausführungsform kann vorgesehen sein, daß die Datenfelder für die Kennzeichnung benachbarter Orte variable Längen aufweisen.

Ausführungsbeispiele der Erfindung sind in der Zeichnung anhand mehrerer Figuren dargestellt und in der nachfolgenden Beschreibung näher erläutert. Es zeigt:
- Fig. 1: schematisch einige durch eine Straße verbundene Orte, die in verschiedenen Ortsdatenbanken aufgeführt sind,
- Fig. 2: bis Fig. 4 jeweils in Tabellenform Ausschnitte aus verschiedenen Beispielen von Ortsdatenbanken und
- Fig. 5: Ausschnitte aus Ortsdatenbanken, die entsprechend den bisherigen bekannten Ortsdatenbanken unvernetzt sind.

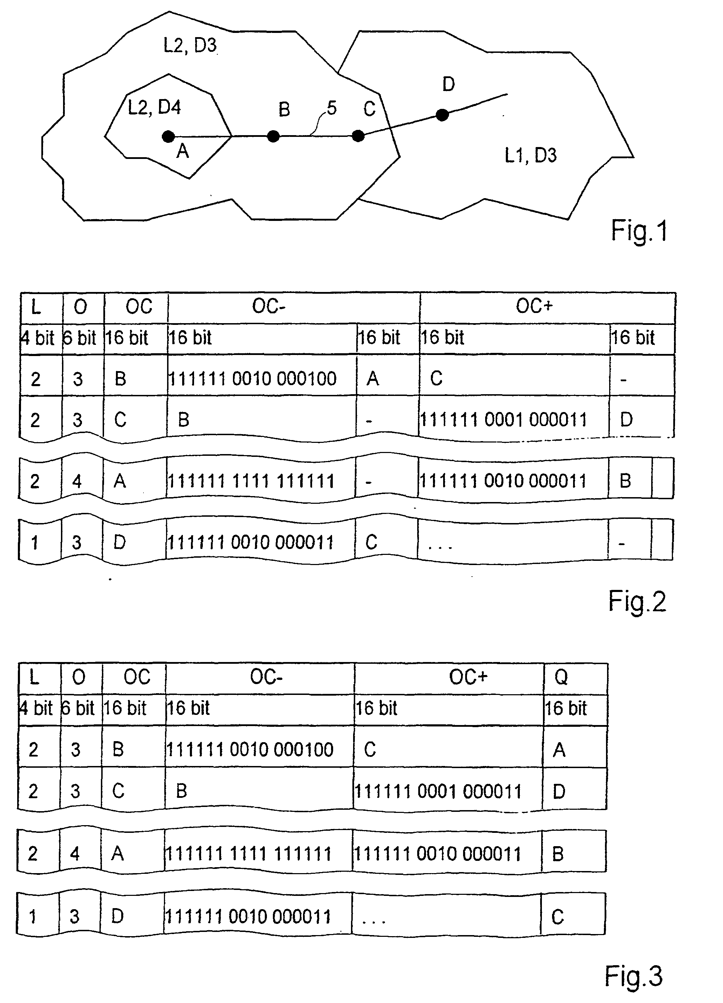

Bei der schematischen Darstellung in Fig. 1 ist eine Straße 5 dargestellt, an der vier Orte A, B, C, D liegen. Davon befinden sich die Orte A, B, C in einem Land L2, während der Ort D im Land L1 liegt, für das eine Ortsdatenbank D3 existiert.

Die Orte B und C sind in einer Ortsdatenbank D3 erfaßt, während innerhalb des Landes L2 für eine begrenzte Region eine Datenbank D4 erstellt wurde. Selbstverständlich enthalten die Datenbanken wesentlich mehr Orte, die der Übersichtlichkeit halber in Fig. 1 nicht dargestellt sind. In den Ländern L1 und L2 existieren Datenbanken D3, die jedoch nur zufällig die gleiche Datenbanknummer 3 aufweisen, da diese auf die jeweiligen Länder bezogen sind und mit Hilfe der Ländernummer (1 oder 2) unterschieden werden können.

In den Figuren 2 bis 5 sind jeweils die Einträge in den Ortsdatenbanken dargestellt, soweit sie zur Erläuterung der erfindungsgemäßen Ortsdatenbank erforderlich sind. Jeweils eine Zeile bezieht sich auf einen Ort und enthält ein Datenfeld von vier Bit für die Ländernummer L, ein Datenfeld von sechs Bit für die Ortsdatenbanknummer O und den Ortscode OC für den jeweiligen Ort, wofür 16 Bit verwendet werden. Jeweils für einen Ort sind dann noch ein Vorgänger OC- und ein Nachfolger OC+ angegeben. Ferner zeigen die Figuren 2 bis 5 jeweils Ausschnitte aus den Ortsdatenbanken D3 und D4 des Landes L2 und der Ortsdatenbank D3 des Landes L1.

Bei dem Ausführungsbeispiel nach Fig. 2 sind die Datenfelder für den Vorgänger OC- und OC+ jeweils 32 Bit breit, wobei 16 Bit für einen Querverweis auf eine andere Ortsdatenbank und weitere 16 Bit für den Ortscode des benachbarten Ortes genutzt werden. So ist beispielsweise in der Zeile des Ortes B unter dem Vorgänger OC- ein Querverweis mit dem Inhalt 111111 0010 000100 eingetragen. Davon bedeuten die ersten sechs Stellen, daß es sich um einen Querverweis auf eine andere Ortsdatenbank handelt. Darauf folgt mit 0010 die Ländernummer (im dargestellten Beispiel 2) und mit 000100 die Ortsdatenbanknummer (4 im dargestellten Beispiel). In der somit spezifizierten Ortsdatenbank (siehe zwei Zeilen tiefer) befindet sich der Ort A, der keinen Vorgänger OCaufweist, was durch die Endekennung 111111 1111 111111 dargestellt wird. Zum Ort B in der Ortsdatenbank D3 des Landes L2 ist noch ein Nachfolger C angegeben, der in der gleichen Datenbank aufgeführt ist und daher keinen Querverweis benötigt. Alternativ können auch dann nur 32 Bit Datenfelder vorgesehen werden, wenn ein Querverweis vorhanden ist. Anderenfalls werden nur 16 Bit vorgesehen.

In der nächst unteren Spalte, die den Ort C betrifft, wird als Vorgänger der Ort B eingetragen und als Nachfolger der Ort D mit einem Querverweis, der auf die Ländernummer 1 und die Datenbanknummer 3 hinweist. Von dem Ort D ausgehend, kann beispielsweise dann im Land L1 in der Datenbank D3 die Routensuche fortgesetzt werden.

Bei dem in Fig. 3 dargestellten Beispiel sind für Vorgänger OC- und Nachfolger OC+ jeweils 16 Bit breite Datenfelder vorgesehen. Im Falle von Querverweisen, wie bei dem Ort B, kann das jeweilige nicht von einem Ort aus der gleichen Datenbank genutzte Datenfeld für den Vorgänger/Nachfolger in Form des reservierten Codeworts, der Ländernummer und der Ortsdatenbanknummer benutzt werden, während ein zusätzlich für einen Querverweis vorgesehenens Datenfeld Q den Ortscode des Ortes aus der anderen Ortsdatenbank enthält. Im Falle des Ortes B tritt der Ort A somit als Vorgänger in Erscheinung, während im Falle des Ortes C der Ort D als Nachfolger eingetragen ist.

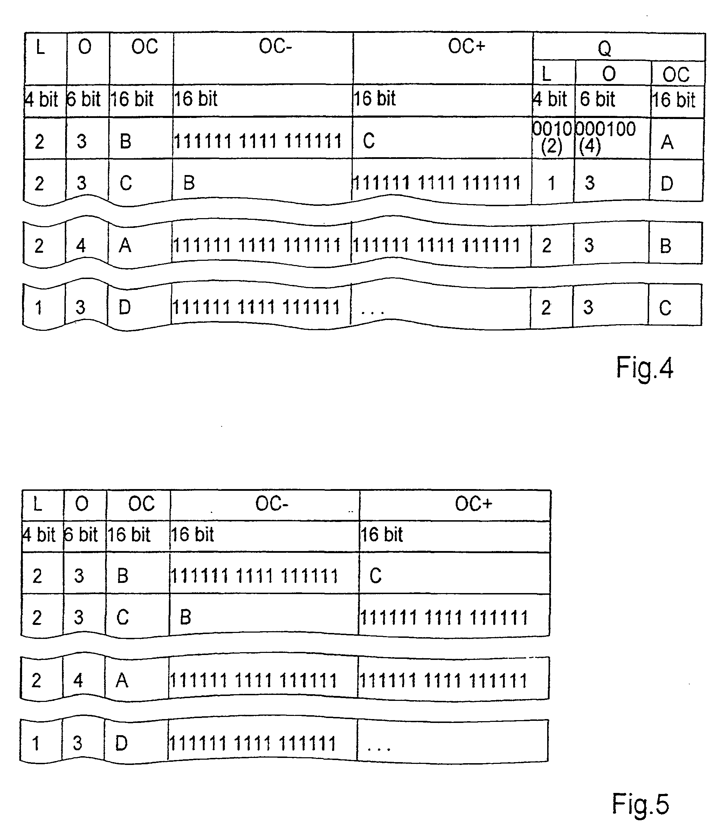

Bei dem Ausführungsbeispiel nach Fig. 4 sind auch die Datenfelder für den Vorgänger OC- und den Nachfolger OC+ vorgesehen. Die Angaben zu Orten in anderen Ortsdatenbanken werden ausschließlich als sogenannte Querverweise aufgelistet. Diese bestehen aus der Ländernummer L, der Ortsdatenbanknummer O und dem Ortscode OC des Ortes in der anderen Datenbank. Diese Ausgestaltung hat den Vorteil, daß eine Ortsdatenbank gemäß DE 196 06 010 A1, die zur Routensuche innerhalb des Gebietes dieser Ortsdatenbank geeignet ist, ohne strukturelle Änderungen auch für die ortsdatenbank-übergreifende Routensuche benutzt werden kann.

Zur weiteren Verdeutlichung der Erfindung sind in Fig. 5 nochmals die gleichen Ausschnitte aus den bereits in Fig. 2 bis Fig. 4 dargestellten Ortsdatenbanken gezeigt, jedoch ohne Änderungen gemäß der Erfinung, d. h. daß der Ort B im Land L2 in der Ortsdatenbank O3 keinen Vorgänger und der Ort C keinen Nachfolger hat. Der Ort A in der Ortsdatenbank D4 hat weder Vorgänger, noch Nachfolger und der Ort D in der Ortsdatenbank D3 im Land L1 hat keinen Vorgänger. Ein Nachfolger des Ortes D ist lediglich angedeutet.

## Patentansprüche

1. Verfahren zur Verknüpfung einer digitalen Verkehrswegenetzbeschreibung mit mindestens einer weiteren digitalen Verkehrswegenetzbeschreibung, **dadurch gekennzeichnet, daß** Datensätze derjenigen Orte, die mindestens einen benachbarten Ort in mindestens einer der weiteren Verkehrswegenetzbeschreibungen aufweisen, mindestens einen Verweis auf mindestens einen solchen benachbarten Ort aufweisen.

2. Ortsdatenbank mit einer Verknüpfung zu mindestens einer weiteren Ortsdatenbank, insbesondere für die Ermittlung von Routen zwischen in der Ortsdatenbank und in der mindestens einen weiteren Ortsdatenbank enthaltenen Orten eines Verkehrswegenetzes, wobei eine zur Decodierung von digital codierten Verkehrsmeldungen vorgesehene Ortsdatenbank (L2, D3) zur Decodierung der digital codierten Verkehrsmeldungen erforderliche Orte als Ortscodes enthält, wobei jeweils einem Ortscode ein Verkehrsweg und Verweise auf benachbarte auf dem gleichen Verkehrsweg liegende Orte in einem Datensatz zugeordnet sind, **dadurch gekennzeichnet, daß** die Datensätze derjenigen Orte (B; C), die mindestens einen benachbarten Ort (A; D) in mindestens einer der weiteren Ortsdatenbanken (L2, D4; L1, D3) aufweisen, mindestens einen Verweis auf mindestens einen solchen benachbarten Ort (A; B) einschließlich einer Ortsdatenbankreferenz enthalten.

3. Ortsdatenbank nach Anspruch 2, **dadurch gekennzeichnet, daß** die Ortsdatenbankreferenz aus einer Ländernummer (L1; L2) und einer Ortsdatenbanknummer (D3; D4) besteht.

4. Ortsdatenbank nach einem der Ansprüche 2 oder 3, **dadurch gekennzeichnet, daß** die Ortsdatenbankreferenz durch ein reserviertes Codewort als solches **gekennzeichnet** ist.

5. Ortsdatenbank nach einem der Ansprüche 2 bis 4, bei der jeweils ein Datensatz außer einem Datenfeld (OC) für den jeweiligen Ort (B; C) und anderen Datenfeldern je ein Datenfeld (OC-; OC+) für die Kennzeichnung benachbarter Orte (C; B) enthält, **dadurch gekennzeichnet, daß** die Datenfelder (OC-; OC+) für die Kennzeichnung benachbarter Orte jeweils zur Aufnahme des reservierten Codeworts, der Ortsdatenbankreferenz und des Ortscodes eines benachbarten in einer der weiteren Ortsdatenbanken (L2, D4; L1, D3) befindlichen Ortes (A; D) ausgelegt sind.

6. Ortsdatenbank nach einem der Ansprüche 2 bis 4, bei der jeweils ein Datensatz außer einem Datenfeld (OC) für den jeweiligen Ort (B; C) und anderen Datenfeldern je ein Datenfeld (OC-; OC+) für die Kennzeichnung benachbarter Orte (C; B) enthält, **dadurch gekennzeichnet, daß** die Datenfelder (OC-; OC+) für die Kennzeichnung benachbarter Orte bei Vorliegen eines benachbarten in einer der weiteren Ortsdatenbanken (L2, D4; L1, D3) befindlichen Ortes (A; D) jeweils zur Aufnahme des reservierten Codeworts und der Ortsdatenbankreferenz ausgelegt sind und daß ein weiteres Datenfeld (Q) dessen Ortscode enthält.

7. Ortsdatenbank nach einem der Ansprüche 2 bis 4, bei der jeweils ein Datensatz außer einem Datenfeld (OC) für den jeweiligen Ort (B; C) und anderen Datenfeldern je ein Datenfeld (OC-; OC+) für die Kennzeichnung benachbarter Orte (C; B) enthält, **dadurch gekennzeichnet, daß** die Datenfelder (OC-; OC+) für die Kennzeichnung benachbarter Orte (C; B) entsprechend dem durch die Ortsdatenbank (L2, D3) wiedergegebenen Teil des Wegenetzes belegt sind und daß in einem Datenfeld (Q) für Querverweise die Ortsdatenbankreferenz und der Ortscode eines benachbarten in einer der weiteren Ortsdatenbanken (L2, D4; L1, D3) befindlichen Ortes (A; D) abgelegt sind.

8. Ortsdatenbank nach einem der Ansprüche 5 bis 7, **dadurch gekennzeichnet, daß** die Datenfelder (OC-; OC+) für die Kennzeichnung benachbarter Orte variable Längen aufweisen.

9. Ortsdatenbank nach Anspruch 2, **dadurch gekennzeichnet, daß** sie für die Codierung und Decodierung von ortsdatenbank-übergreifenden Meldungen genutzt wird.

## Claims

1. Method for linking a digital traffic route network description with at least one further digital traffic route network description, **characterized in that** data records for those locations which have at least one adjacent location in at least one of the further traffic route network descriptions have at least one reference to at least one such adjacent location.

2. Location database with a link to at least one further location database, particularly for ascertaining routes between locations in a traffic route network which are held in the location database and in the at least one further location database, where a location database (L2, D3) provided for decoding digitally coded traffic messages contains, as location codes, locations which are required for decoding the digitally coded traffic messages, where a respective location code has an associated traffic route and associated references to adjacent locations situated on the same traffic route in a data record, **characterized in that** the data records for those locations (B; C) which have at least one adjacent location (A; D) in at least one of the further location databases (L2, D4; L1, D3) contain at least one reference to at least one such adjacent location (A; B), including a location database reference.

3. Location database according to Claim 2,
**characterized in that** the location database reference comprises a country number (L1; L2) and a location database number (D3; D4).

4. Location database according to either of Claims 2 and 3, **characterized in that** the location database reference is **characterized by** a reserved code word as such.

5. Location database according to one of Claims 2 to 4, in which a respective data record contains, apart from a data field (OC) for the respective location (B; C) and other data fields, a respective data field (OC-; OC+) for marking adjacent locations (C; B), **characterized in that** the data fields (OC-; OC+) for marking adjacent locations are respectively designed to receive the reserved code word, the location database reference and the location code for an adjacent location (A; D) which is in one of the further location databases (L2, D4; L1, D3).

6. Location database according to one of Claims 2 to 4, in which a respective data record contains, apart from a data field (OC) for the respective location (B; C) and other data fields, a respective data field (OC-; OC+) for marking adjacent locations (C; B), **characterized in that** the data fields (OC-; OC+) for marking adjacent locations are respectively designed to receive the reserved code word and the location database reference when an adjacent location (A; D) which is one of the further location databases (L2, D4; L1, D3) is present, and **in that** a further data field (Q) contains the location code thereof.

7. Location database according to one of Claims 2 to 4, in which a respective data record contains, apart from a data field (OC) for the respective location (B; C) and other data fields, a respective data field (OC-; OC+) for marking adjacent locations (C; B), **characterized in that** the data fields (OC-; OC+) for marking adjacent locations (C; B) are occupied in line with that part of the route network which is portrayed by the location database (L2, D3), and **in that** a data field (Q) for cross-references stores the location database reference and the location code of an adjacent location (A; D) which is in one of the further location databases (L2, D4; L1, D3).

8. Location database according to one of Claims 5 to 7, **characterized in that** the data fields (OC-; OC+) for marking adjacent locations have variable lengths.

9. Location database according to Claim 2, **characterized in that** it is used for coding and decoding inter-location-database messages.

## Revendications

1. Procédé d'association d'une description de réseau routier numérique avec au moins une autre description de réseau routier numérique,
**caractérisé en ce que**
des jeux de données des lieux qui présentent au moins un lieu voisin situé dans au moins l'une des autres descriptions de réseaux routiers présentent au moins une référence à au moins un tel lieu voisin.

2. Base de données de lieux comportant une association avec au moins une autre base de données de lieux, en particulier pour la détermination d'itinéraires entre des lieux d'un réseau routier contenus dans la base de données de lieux et dans au moins l'autre base de données de lieux, une base de données de lieux (L2, D3) prévue pour le décodage de messages de circulation codés numériquement contenant, pour le décodage des messages de circulation codés numériquement, les lieux nécessaires sous forme de codes de lieux, un code de lieu étant respectivement associé dans un jeu de données à une voie de circulation et à des références à des lieux voisins situés sur la même voie de circulation,
**caractérisée en ce que**
les jeux de données des lieux (B ; C) qui présentent au moins un lieu voisin (A ; D) situé dans au moins l'une des autres bases de données de lieux (L2, D4 ; L1, D3) contiennent au moins une référence à au moins un tel lieu voisin (A ; B) y compris une référence de base de données de lieux.

3. Base de données de lieux selon la revendication 2,
**caractérisée en ce que**
la référence de base de données de lieux se compose d'un numéro de région (L1 ; L2) et d'un numéro de base de données de lieux (D3 ; D4).

4. Base de données de lieux selon l'une des revendications 2 ou 3,
**caractérisée en ce que**
la référence de base de données de lieux est **caractérisée en** tant que telle par un mot de code réservé.

5. Base de données de lieux selon l'une des revendications 2 à 4, dans laquelle respectivement un jeu de données contient, outre un champ de données (OC) pour le lieu respectif (B ; C) et d'autres champs de données, respectivement un champ de données (OC- ; OC+) pour la caractérisation de lieux voisins (C ; B),
**caractérisée en ce que**
les champs de données (OC- ; OC+) pour la caractérisation de lieux voisins sont respectivement conçus pour recevoir le mot de code réservé, la référence de base de données de lieux et le code de lieu d'un lieu voisin (A ; D) situé dans l'une des autres bases de données de lieux (L2, D4 ; L1, D3).

6. Base de données de lieux selon l'une des revendications 2 à 4, dans laquelle respectivement un jeu de données contient, outre un champ de données (OC) pour le lieu respectif (B ; C) et d'autres champs de données, respectivement un champ de données (OC- ; OC+) pour la caractérisation de lieux voisins (C ; B),
**caractérisée en ce que**
les champs de données (OC- ; OC+) pour la caractérisation de lieux voisins, en présence d'un lieu voisin (A ; D) situé dans l'une des autres bases de données de lieux (L2, D4 ; L1, D3), sont respectivement conçus pour recevoir le mot de code réservé et la référence de base de données de lieux, et un autre champ de données (Q) contient son code de lieu.

7. Base de données de lieux selon l'une des revendications 2 à 4, dans laquelle respectivement un jeu de données contient, outre un champ de données (OC) pour le lieu respectif (B ; C) et d'autres champs de données, respectivement un champ de données (OC- ; OC+) pour la caractérisation de lieux voisins (C ; B),
**caractérisée en ce que**
les champs de données (OC- ; OC+) pour la caractérisation de lieux voisins (C ; B) sont conçus conformément à la partie du réseau routier restituée par la base de données de lieux (L2, D3), et dans un champ de données (Q) pour des références croisées sont stockés la référence de base de données de lieux et le code de lieu d'un lieu voisin (A ; D) situé dans l'une des autres bases de données de lieux (L2, D4 ; L1, D3).

8. Base de données de lieux selon l'une des revendications 5 à 7,
**caractérisée en ce que**
les champs de données (OC- ; OC+) pour la caractérisation de lieux voisins présentent des longueurs variables.

9. Base de données de lieux selon la revendication 2,
**caractérisée en ce qu'**
elle est utilisée pour le codage et le décodage de messages arrivant à la base de données.
